# EUROPÄISCHE PATENTANMELDUNG

(11) **EP 1 244 255 A1**
(43) Veröffentlichungstag der Anmeldung: **25.09.2002**
(21) Anmeldenummer: 01106858.2
(22) Anmeldetag: 20.03.2001
(51) Int. Cl.: H04L 12/56, H04Q 7/38, H04L 12/28

(54) **Verfahren und Vorrichtung zur Verbesserung eines Datendurchsatzes**

(71) Anmelder: Telefonaktiebolaget L M Ericsson (Publ), 126 25 Stockholm (SE)
(72) Erfinder: Meyer, Michael, 52062 Aachen (DE); Ludwig, Reiner, 52393 Hürtgenwald (DE)
(74) Vertreter: Mohsler, Gabriele

(57) **Zusammenfassung**

Die Erfindung betrifft ein Verfahren und eine Vorrichtung zur Verbesserung eines Datendurchsatzes bei einer Übertragung über ein Kommunikationsnetz, insbesondere bei einem Kanalwechsel, bei dem ein neu zugewiesener Kanal eine geringere Übertragungsrate aufweist. Hierbei wird eine Entscheidung über den Kanalwechsel in einer Verwaltungseinheit getroffen. Diese wird einer Bereitstellungseinheit mitgeteilt. Nach dem Empfang der Mitteilung erfolgt eine Sicherung der Übertragungsparameter eines alten und eines neuen Kanals. Anhand dieser Informationen wird eine Adaption an die Übertragungsparameter des neuen Kanals durchgeführt. Im Falle, daß die Mitteilung vor der Durchführung des Kanalwechsels erfolgt, wird die Anzahl der Datenpakete, die versendet werden, verringert um auf diese Weise eine bessere Adaption zu erzielen und abrupte Veränderungen in der Übertragungsrate zu vermeiden. Im Falle, daß die Mitteilung über einen Kanalwechsel erst nach dessen Durchführung erfolgt, wird die abrupte Senkung der Übertragungsrate dadurch ausgeglichen, daß zusätzlich zu der anteilig zustehenden Übertragungsrate des neuen Kanals zeitweilig mehr Daten übertragen werden.

## Beschreibung

Die Erfindung betrifft ein Verfahren, eine Vorrichtung und ein Computerprogramm zur Verbesserung eines Datendurchsatzes bei einer Übertragung über ein Kommunikationsnetz, insbesondere bei einem Kanalwechsel auf einer Teilverbindung innerhalb des Kommunikationsnetzes.

Die Übertragung von Daten zwischen den kommunizierenden Partnerinstanzen basiert auf standardisierten Protokollstapeln. Ein Protokollstapel besteht aus mehreren Protokollschichten, im weiteren auch als Schichten bezeichnet. Die oberste Schicht, die Anwendungsschicht beinhaltet die Anwendungen, die von einem Benutzer direkt genutzt werden, beispielsweise gehört das Benutzen des Internet zu einer möglichen Anwendung. Unter der Anwendungsschicht ist eine Transportschicht mit den entsprechenden Transportprotokollen, wie beispielsweise dem TCP (Transmission Control Protokoll) angesiedelt. Das Internet Protokoll (IP) bildet ein Beispiel für die Netzwerkschicht. Die zwei untersten Schichten, die Sicherungsschicht und die Bitübertragungsschicht, können unter dem Begriff netzwerkorientierte Schicht zusammengefaßt werden, denn sie sind in Abhängigkeit von dem darunterliegenden Netz spezifisch definiert.

Das Transportprotokoll TCP leistet einen zuverlässigen Transportdienst von Daten zwischen zwei Kommunikationspartnern. Hierbei ist das TCP für eine Ende-zu-Ende Übertragung zuständig, gegebenenfalls über eine heterogene Verbindung, die streckenweise durch unterschiedliche Netztopologien, Übertragungsraten und Übertragungsverzögerungen, charakterisiert werden kann. Mit aufwendigen Mechanismen wird ein Adaptieren der Übertragung an die Charakteristiken der Verbindungsstrecke und eine Robustheit gegen das Auftreten von Fehlern gewährleistet. Die genaue Beschreibung der TCP Verfahren kann aus "TCP/IP. Illustrated, Volume 1" von W. Richard Stevens entnommen werden. Im weiteren wird lediglich auf einige dieser Mechanismen näher eingegangen.

An dieser Stelle wird ein Verfahren vorgestellt, das sich auf die Erkennung von Paketverlusten, die beim Auftreten von Fehlern oder Überlastsituationen während einer Übertragung auftreten können, bezieht.

Ein Mechanismus zur Erkennung von Paketverlusten beruht auf dem sogenannten kumulativen Bestätigungsschema von TCP. Tritt während einer Übertragung ein Paketverlust ein, dann macht sich dies bei dem Empfänger durch den Empfang eines Datenpakets, das aufgrund der Sequenznummer nicht als das folgende in der Reihenfolge erwartet wurde, bemerkbar. Dies führt dazu, daß eine Bestätigungsnachricht an den Sender geschickt wird mit der Sequenznummer des nicht empfangenen Datenpakets. Diese Bestätigungsnachrichten heißen in diesem Fall Bestätigungsduplikate und der Empfang des dritten Bestätigungsduplikats wird von dem Sender als ein Verlust des betreffenden Datenpaketes aufgefaßt und ein erneutes Versenden des Datenpaketes wird initiiert. Der Empfang von drei Bestätigungsduplikate wird beim Sender als eine vorübergehende Störung interpretiert. Denn eine Bestätigungsnachricht wird an den Sender dann verschickt, wenn ein weiteres Datenpaket bei dem Empfänger empfangen wurde und aufgrund dessen, daß weitere Bestätigungen angekommen sind, folgert der Sender, daß die Datenpakete, die nach dem fehlerhaften Datenpaket versendet wurden, auch empfangen wurden. In diesem Fall ist dies eine Indikation, daß lediglich das explizite Versenden des fehlerhaftes Datenpaketes ausreichend für die Behebung des Fehlers ist. Eine andauernde Störung wird von einem anderen Mechanismus erkannt, der im folgenden vorgestellt wird.

Der Mechanismus von TCP, mit dem ein schwerwiegender Verlust von Datenpaketen erkannt wird, besteht in der Verwendung von Zeitlimits. Ein Ablauf eines Zeitlimits wird als das sogenannte Timeout bezeichnet. Ein Zeitlimit hängt mit einer Zeitspanne zusammen, die für die Durchführung einer bestimmten Aufgabe vorgesehen ist. Wenn in dieser Zeitspanne die Aufgabe nicht realisiert wird, tritt ein Zeitalarm auf. Bei TCP ist beispielsweise eine Zeitspanne definiert, das sogenannte RTT (Round Trip Time), die die Zeit angibt, die zwischen der Übergabe eines TCP-Paketes an die IP-Schicht und dem Empfang einer zugehörigen Bestätigungsnachricht von einem Empfänger, daß dieses Datenpaket korrekt empfangen wurde, vergeht. Mittels dieser Zeitspanne wird eine Anpassung an unterschiedliche Übertragungsbedingungen ermöglicht, weil dieser Wert eine Aussage über die aktuelle Leistung einer Übertragung enthält. Ausgehend von dem Mittelwert und der Varianz des RTT wird ein RTO (Retransmission Timeout) ermittelt. Ein RTO bezeichnet den Zeitpunkt, zu dem eine wiederholte Übertragung eines Datenpaketes erfolgt, für das am längsten keine rechtzeitige Bestätigungsnachricht für den Empfang angekommen ist. Die genaue Ermittlung des RTO kann aus RFC 2988, Transmission Control Protocol, November 2000 entnommen werden. Bei der zeitlimit-basierten Fehlererkennung hat die Genauigkeit der Ermittlung des RTO einen großen Einfluss auf den Durchsatz. Ist das Zeitlimit zu knapp bemessen, werden unnötig Datenpakete wiederholt. Ist er andererseits zu lang, vergeht übermäßig viel Zeit, bis der Verlust eines Datenpaketes bemerkt wird und dies führt zu Zeitintervallen, in denen untätig gewartet wird, bis die Übertragung fortgesetzt wird. Die Ermittlung eines RTO erfolgt dynamisch während einer Übertragung, um auf diese Weise die RTT Schwankungen in einer Übertragung möglichst genau aufzunehmen. Trotz dieser Maßnahmen führt der Algorithmus zur Bestimmung der RTO Werte im Falle von abrupten Schwankungen des RTT zu Problemen. Es wurde ein verbesserter Algorithmus entwickelt, der genauere Werte für RTO liefert. Bei jeder Messung des RTO Wertes wird zusätzlich ein geglätteter Mittelwert der Abweichung zwischen dem bisherigen Mittelwert des RTT und den tatsächlich gemessenen RTT Werten neu gebildet. Wenn sich jedoch der RTT abrupt ändert, nachdem vorher für längere Zeit lediglich kleine Abweichungen aufgetreten waren, kann auch die berechnete mittlere Abweichung die Schwankungen nicht sofort ausgleichen. Wenn das RTT einen wesentlich größeren Wert aufweist als das RTO, kann dies dazu führen, daß es zum Ablauf des Zeitlimits für ein gesendetes Datenpaket kommt, bevor eine Bestätigungsnachricht für dieses Datenpaket ankommt. Der Ablauf eines Zeitlimits wird als Datenpaketverlust und gleichzeitig als Indikation für Übertragungsprobleme ausgewertet. Dies hat zur Folge, daß obwohl ein Datenpaket korrekt übertragen und empfangen wurde, dieses als verlorengegangen erkannt wird und es werden TCP Mechanismen zur Behebung des Fehlers und zur Vermeidung des Auftretens weiterer Fehler gestartet. Der Grundgedanke hinter diesen TCP Mechanismen besteht darin, beim Auftreten von Paketverlusten sofort die Übertragungsrate zu verringern, mit der die Pakete dem Kommunikationsnetz übergeben werden. Danach wird die Rate langsam wieder gesteigert, um sich an die tatsächlich vorhandene Netzkapazität heranzutasten.

Die zur Flusskontrolle der Datenpakete verwendeten Algorithmen, die das Auftreten weiterer Übertragungsfehler vermeiden, werden als Congestion Avoidance und als Slow Start Algorithmus bezeichnet. Zur Realisierung der beiden Algorithmen wird die sogenannte Fenstertechnik eingesetzt. Bei dieser Technik werden bei dem Sender zwei Arten von Fenster verwaltet, ein Fenster, dessen Größe von dem Empfänger vorgeschlagen und bestätigt wurde und das sogenannte Stauungsfenster, (congestion window). Die Anzahl der Pakete, die versendet werden können, entspricht dem Minimum der beiden Fenster. Die Ermittlung der Stauungsfenstergröße erfolgt schrittweise. Nach der Initiierung einer Verbindung fängt ein Sender mit dem Versenden eines Pakets an. Nach Erhalt einer Bestätigungsnachricht vom Empfänger über den korrekten Empfang, wird das Stauungsfenster um eins erhöht und folglich erfolgt das Versenden von zwei Paketen. Nachdem die Bestätigungsnachrichten für die zwei gesendete Pakete empfangen wurden, erfolgt ein Versenden von vier Paketen und so weiter bis eine Fenstergröße erreicht wird, die von dem Empfänger beim Verbindungsaufbau vorgeschlagen wurde oder bis ein Paketverlust aufgetreten ist. Hierbei wird ein Paketverlust durch Zeitlimit oder durch den Empfang des dritten Bestätigungsduplikats erkannt. Bei Erkennung eines Paketverlustes durch ein Zeitlimit wird die Stauungsfenstergrösse auf ein Segment reduziert, wodurch ein Slow-Start Algorithmus initiiert wird und das Zeitlimit wird gegenüber dem aktuellen Wert verdoppelt. Nach dem Initiieren eines Slow-Start Algorithmus wächst die Stauungsfenstergrösse zunächst exponentiell. Der exponentielle Wachstum wird beibehalten bis die Hälfte der ursprünglichen Fenstergröße, das heisst die Fenstergrösse, die vor dem Auftreten eines Paketverlustes galt, erreicht ist, danach geht es in ein lineares Wachstum über, bis wieder ein Paketverlust durch Zeitlimit oder durch den Empfang des dritten Bestätigungsduplikats erkannt wird. Das heißt bei einer andauernden Störung wird die Fenstergrösse auf maximal ein Paket und das RTO wird auf den doppelten Wert des bisherigen RTO Wertes gesetzt. Nach der Wiedereinsetzung der Übertragung wird die Fenstergrösse durch den Slow-Start Algorithmus reguliert und das RTO in Abhängigkeit von dem RTT neu errechnet.

Bei einem durch Bestätigungsduplikate erkannten Paketverlust wird hingegen kein Slow-Start Algorithmus gestartet, stattdessen wird die Stauungsfenstergrösse um die Hälfte reduziert. Hierbei wird nur das Paket wiederholt, auf das sich die Bestätigungsduplikate beziehen und anschließend wird mit der Übertragung folgender Pakete fortgefahren. Dieses Verfahren ist auch als das sogenannte Fast Retransmit und Fast Recovery bekannt. Eine genaue Beschreibung findet sich in "TCP/IP. Illustrated, Volume 1" von W. Richard Stevens.

Das heißt ein erkannter Paketverlust führt zu einer wiederholten Übertragung des verlorengegangenen Datenpaketes und zur Anwendung von TCP Verfahren, wie Fast Retransmit oder Slow Start, die zur Behebung der Paketverluste und zur Vermeidung des Auftretens weiterer Fehler vorgesehen sind. Eine wiederholte Übertragung eines Datenpaktes und die Anwendung der TCP Verfahren, die nach Erkennung eines Datenpaketverlustes gestartet werden, verbrauchen Ressourcen und Zeit. Dies hat eine negative Auswirkung auf die Übertragungsleistung in den Situationen, in denen überflüssigerweise ein Paketverlust erkannt wird. Dies passiert beispielsweise, wenn es aufgrund einer kurzzeitigen Unterbrechung zur Verzögerungen in einer Übertragung kommt. Dies kann dazu führen, daß der Empfang einer Bestätigungsnachricht so lange dauert, daß es inzwischen zu einem Ablaufs eines Zeitlimits kommt und folglich zu der Feststellung eines Paketverlusts. Tatsächlich kommt das Paket jedoch an. Weil aber ein Paketverlust festgestellt wurde, werden die bereits verschickten und auch korrekt empfangene Datenpakete unnötigerweise erneut übertragen und damit verbundene TCP Mechanismen werden gestartet. Das überflüssige Auftreten eines Zeitlimitsablaufs wird als spurious timeout bezeichnet und das erneute Übertragen von bereits verschickten Paketen erfolgt nach dem go-back-N Algorithmus.

Besonders problematisch erweist sich dies bei Kommunikationsnetzen, die durch hohe Schwankungen in den Übertragungsraten charakterisiert sind. Zu diesen Netzen gehören die Mobilfunknetze, darunter fallen GSM (Global System for Mobile Communication), GPRS (General Packet Radio Service), UMTS (Universal Mobile Telecommunication System), EDGE (Enhanced Data rates for GSM Evolution) oder IMT-2000.

Insbesondere in den mobilen Netzen tritt aber das überflüssige Auftreten eines Zeitlimitsablaufs oft ein, vor allem wenn plötzliche Verzögerungen in der Übertragung aufgrund eines Kanalwechsels eintreten. Ein Kanalwechsel kann aufgrund eines Wechsels zwischen Kommunikationsnetzen stattfinden, beispielsweise aufgrund eines Wechsels von UMTS zu GSM oder von WLAN (Wireless Local Area Network) zu GPRS. Ein Kanalwechsel kann auch in einem Kommunikationsnetz stattfinden, beispielsweise aufgrund eines Handovers. Eine weitere Ursache für den Kanalwechsel kann in den Prioritäten der Behandlung verschiedener Benutzer liegen. Die Benutzer, die telephonieren, haben oft eine höhere Priorität als Benutzer, die einen Datentransfer durchführen. Das heißt beim Hinzukommen neuer Benutzern, die ein Telefongespräch aufsetzen, können die Datenbenutzer auf andere Übertragungskanäle verlagert werden. Die Kanäle sind mittels der Übertragungsparameter, wie beispielsweise die Übertragungsrate oder die Paketgröße charakterisiert und ein Kanalwechsel kann beispielsweise zu unterschiedlichen Übertragungsraten führen oder zumindest zu anderen RTT gemessen auf der Sicherungsschicht und somit gegebenenfalls zum Ablauf des Zeitlimits auf den entsprechenden Schichten. Ein Benutzer kann beispielsweise von einem Kanal mit einer hohen Übertragungskapazität auf einen Kanal, der eine kleinere Übertragungskapazität aufweist, umgeschaltet werden.

Die Änderungen, die mit dem Kanalwechsel auf der Bitübertragungsschicht zusammenhängen, bemerkt die Transportschicht, insbesondere das TCP erst nach der Durchführung des Kanalwechsels, indem eine abrupte Veränderung des RTT verzeichnet wird. Diese Veränderungen führen gegebenenfalls zum Überschreiten eines Zeitlimits und somit zu einer erneuten Wiederholung eines Datenpaket und zum Starten der entsprechenden Verfahren, die mit der Behebung der Übertragungsfehler und der Vermeidung des Auftretens weiterer Übertragungsfehler zusammenhängen. Gerade der Kanalwechsel führt üblicherweise nicht zum Datenpaketverlust. Aus diesem Grund ist die Feststellung des Paketverlustes durch Zeitlimitablauf und die Durchführung der TCP Mechanismen, die bei dieser Feststellung gestartet werden überflüssig. Diese Mechanismen verbrauchen jedoch Ressourcen und viel Zeit, was sich in der Verringerung des Übertragungsdurchsatzes widerspiegelt, beispielsweise wird gegebenenfalls beim Slow-Start Algorithmus die zur Verfügung stehende Übertragungskapazität aufgrund der langsam ansteigenden Fenstergrösse nicht optimal ausgenutzt.

Demgemäß ist die Aufgabe der vorliegenden Erfindung ein Verfahren und eine Vorrichtung bereitzustellen, die eine optimierte Nutzung der zur Verfügung stehenden Übertragungskapazität gewährleistet. Insbesondere ist die Aufgabe der vorliegenden Erfindung eine optimierte Nutzung der zur Verfügung stehenden Übertragungskapazität bei einem Kanalwechsel zu schaffen.

Dies wird erfindungsgemäß gelöst durch die Lehre des Patentanspruches 1 und durch die Lehre der Patentanspruche 11 und 15.

Vorteilhaft erweist sich hierbei, daß eine überflüssige Adaption der Protokolle der höheren Schichten vermieden wird und dies führt zu einer besseren Ausnutzung der Ressourcen während einer Übertragung.

Weitere vorteilhafte Ausgestaltungen der Erfindung ergeben sich aus den Patentansprüchen 2 bis 10 und aus 12 bis 14.

Im folgenden wird die Erfindung anhand von Ausführungsbeispielen und Figuren näher erläutert.
- Fig.1:: Ablaufdiagramm des erfindungsgemäßen Verfahrens,
- Fig.2:: Darstellung einer Verbindung über ein Kommunikationsnetz,
- Fig.3a:: schematische Darstellung der Übertragungsraten von zwei Kanälen,
- Fig.3b:: Pre-Scheduling,
- Fig.3c:: Post-Scheduling unter Verwendung eines zusätzlichen Kanals
- Fig.3d:: Post-Scheduling bei einem gemeinsam genutzten Kanals

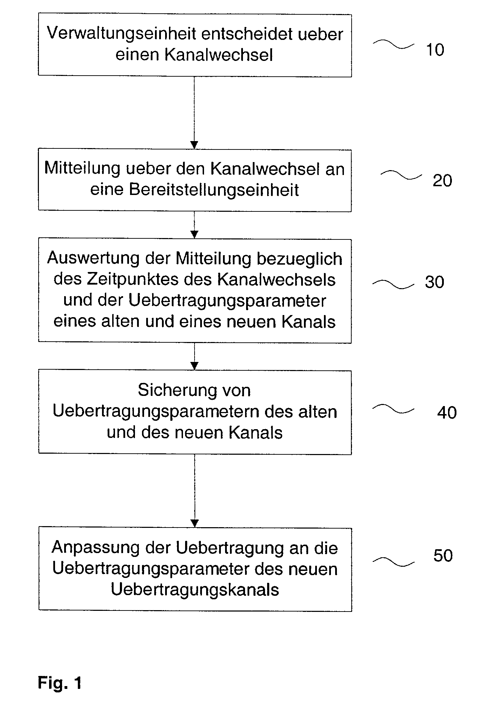

Im folgenden wird die Erfindung anhand der Figur 1 und des Patentanspruches 1 näher erläutert.

Ein Kanalwechsel während einer Übertragung oder eine Zuteilung von Kanälen bei einem Verbindungsaufbau erfolgt in einem Kommunikationsnetz mittels einer Verwaltungseinheit zur Verwaltung von Kanälen und einer Bereitstellungseinheit zur Bereitstellung, zur Verteilung und zum Verschicken von Daten über die Kanäle. Die Kanäle sind mittels der Übertragungsparameter charakterisiert. Der Begriff Übertragungsparameter umfaßt verschiedene Größen, wie beispielsweise die Übertragungsrate, die Paketgröße, die sogenannte processing time, damit wird die Verzögerungszeit bei dem Sender und Empfänger aufgrund der Aufarbeitung der Daten bezeichnet. Auf andere Übertragungsparameter wird im weiteren näher eingegangen. Die Übertragungsparameter rufen die Paketverzögerungszeit hervor und die Anpassung der Übertragungsparameter beeinflusst die Anpassung der Paketverzögerungszeiten. Hierbei bezeichnet die Paketverzögerungszeit die Verzögerungen in den Übertragungen von Datenpaketen, die beispielsweise aufgrund der Reduzierung der Übertragungsrate hervorgerufen werden können. Aus diesem Grund werden im weiteren die an dieser Stelle eingeführten Definitionen alternativ benutzt, wenn nicht explizit gesagt wird, um welche Übertragungsparameter es sich handelt.

Gemäß Figur 1 wird in einem ersten Schritt 10 die Entscheidung über den Kanalwechsel von der Verwaltungseinheit getroffen. Diese Einheit verfügt über die notwendigen Informationen und entsprechende Algorithmen, die zu der Entscheidung verhelfen. Diese Entscheidung, die den Zeitpunkt des Kanalwechsels und die Übertragungsparameter eines neuen und eines alten Kanals enthält, wird der Bereitstellungseinheit mitgeteilt, 20. Die Bereitstellungseinheit wertet diese Mitteilung aus. Insbesondere wird ausgewertet, ob ein Kanalwechsel sofort oder verzögert durchzuführen ist, 30. Anhand dieser Information wird eine Anpassung der Übertragungsparameter entweder vor oder nach der Durchführung des Kanalwechsels realisiert. Eine weitere Möglichkeit sieht vor die Anpassung sowohl vor, als auch nach der Durchführung eines Kanalwechsels zu realisieren. Die Anpassung 50 erfolgt anhand der Ermittlung der Datenpakete, die verschickt werden sollen. Zu diesem Zweck wird sowohl die Paketverzögerungszeit, die durch die Übertragungsparameter hervorgerufen wird, des neuen Kanals als auch des alten Kanals berücksichtigt. Wird beispielsweise festgestellt, daß die Paketverzögerungszeit des neuen Kanals größer ist, wird vor der Durchführung des Kanalwechsels die Paketverzögerungszeit des alten Kanals bewußt vergrößert, indem weniger Datenpakete bereitgestellt und verschickt werden. Im Falle, daß ein Kanalwechsel bereits stattgefunden hat, erfolgt eine Reduzierung der Paketverzögerungszeit, indem zeitweilig mehr Datenpakete beispielsweise über einen zusätzlichen Datenkanal übertragen werden.

Um eine Anpassung der Übertragungsparameter bei Kanälen, die unterschiedliche Paketverzögerungszeiten aufweisen zu realisieren, ist eine Sicherung der Übertragungsparameter eines alten oder/und eines neuen Kanals durchzuführen, beispielsweise durch eine Abspeicherung in den zu diesem Zweck vorgesehenen Mitteln, 40. Im Falle, daß ein Kanalwechsel bereits stattgefunden hat, werden die Übertragungsparameter des alten Kanals gesichert, damit anhand der Übertragungsparameter des alten und des neuen Kanals eine nachträgliche Anpassung der Übertragungsparameter an die Gegebenheiten des neuen Kanals gewährleistet ist. Im Falle eines bevorstehenden Kanalwechsels erfolgt die Sicherung der Übertragungsparametern des neuen Kanals, so daß eine Anpassung der Übertragungsparameter des alten Kanals, der aber zu diesem Zeitpunkt weiterhin genutzt wird, an die Übertragungsparameter des neuen Kanals, der nach dem durchgeführten Kanalwechsel genutzt wird, gewährleistet wird.

Ein System mit einer Verwaltungseinheit zur Verwaltung von Kanälen, und mit einer Bereitstellungseinheit zur Bereitstellung von Daten für die Übertragung über die Kanäle ist zur Realisierung der erfindungsgemäßen Lösung zur Verbesserung eines Datendurchsatzes einer Übertragung über ein Kommunikationsnetz bereitgestellt. Dieses System verfügt über ein Entscheidungsmittel, das beispielsweise in der Verwaltungseinheit plaziert ist. Das Entscheidungsmittel trifft eine Entscheidung über einen Kanalwechsel. Die Entscheidung wird der Bereitstellungseinheit mittels eines Mitteilungsmittels mitgeteilt. Nach dem Empfang der Mitteilung werden die Übertragungsparameter eines alten Kanals und eines neuen Kanals mittels eines Speichers gesichert. Dies wird vorzugsweise in der Bereitstellungseinheit durchgeführt. Anhand der Übertragungsparameter des alten Kanals und des neuen Kanals wird eine Anpassung der Übertragung des alten Kanal auf die Übertragungsparameter des neuen Kanals mittels eines Anpassungsmittels durchgeführt.

Im folgenden wird die Erfindung anhand eines Ausführungsbeispiels näher erläutert. Beispielhaft wird das Ausführungsbeispiel auf das UMTS bezogen.

Zu diesem Zweck wird ein Netzwerksystem verwendet, das an dieser Stelle schematisch kurz erläutert wird. Das UMTS Netzwerk beinhaltet eine Benutzerausrüstung, die über ein UTRAN (UMTS Terrestial Radio Access Network) mit dem CN (Core Network) kommunizieren kann. Die Benutzerausrüstung, im weiteren auch als mobile Station bezeichnet, kann beispielsweise ein UMTS Endgerät sein. Die mobile Station kommuniziert mit einem Node B über eine Funkverbindung. Der Node B ist wiederum mit einem RNC (Radio Network Controler) verbunden, das ein Bestandteil des UTRANs ist. Das RNC steht mit dem CN in Verbindung. Eine weitere Einheit, das sogenannte Gateway GGSN ist für eine Kommunikation mit einem externen Netz, beispielsweise mit einem anderen mobilen Netz oder mit dem Internet zuständig.

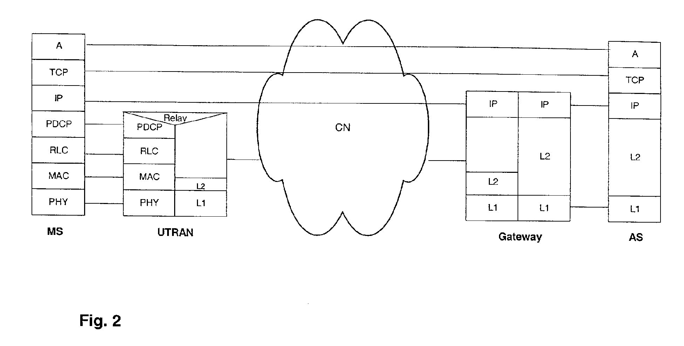

Im folgenden werden genauer die netzwerkorientierten Schichten des Protokollstapels einer mobilen Station und eines UTRANs anhand der Figur 2 dargestellt.

Figur 2 stellt schematisch eine Verbindung zwischen einer mobilen Station MS und einem sogenanntem Server AS dar. In die Verbindung ist, wie es oben beschrieben wurde, ein UTRAN (UMTS Terrestial Radio Access Network), ein CN (Core Network) und ein Gateway involviert. Diese Einheiten, außer des CNs sind mittels von Protokollstapeln dargestellt. Wie bereits beschrieben, besteht ein Protokollstapel aus mehreren Protokollschichten. Die Protokollschichten sind in Figur 2 in den jeweiligen Protokollstapeln der Einheiten entsprechend bezeichnet. Beispielsweise enthält der Protokollstapel der MS eine Anwendungschicht A, darunter liegt die Transportschicht TCP, dann die Netzwerkschicht IP und darunter die netzwerkorientierten Schichten. Die netzwerkorientierten Schichten beinhalten ein Konvergenzprotokoll PDCP (Packet Data Convergance Protocol), eine darunter eingegliederte RLC (Radio Link Control) Schicht, eine MAC (Medium Access Control) Schicht und eine physikalische Schicht (PHY). Ein ähnlicher Aufbau der netzwerkorientierten Schichten ist ebenfalls in dem UTRAN vorhanden. Die durchgezogenen Verbindungslinien weisen auf die logischen Verbindungen zwischen den jeweiligen Schichten hin. Beispielhaft ist aus der Figur 2 ersichtlich, daß eine TCP Verbindung eine Endezu-Ende Verbindung ist. Im folgenden wird auf die netzwerkorientierten Schichten der MS und des UTRANs näher eingegangen. Auf die netzwerkorientierten Schichten der restlichen Einheiten ist lediglich mittels der Hinweise L1 und L2 hingewiesen worden, denn ein detaillierter Aufbau dieser Protokolschichten hängt mit dem zugrundeliegenden Netzwerk (CN) zusammen und ist hier unerheblich.

Das PDCP stellt die Schnittstelle zwischen der Netzwerkschicht, beispielsweise einer Internet Protokol (IP) Schicht und der RLC Schicht dar. Hierbei besteht die Aufgabe von PDCP in der Umwandlung, insbesondere in der Segmentierung der IP Pakete in kleinere Datenpakete. Bei jedem Verbindungsaufbau wird auf der RLC Schicht eine oder mehrere RLC Instanzen aktiviert. Dies wird von dem RRM (Radio Resource Management) reguliert. Die RLC Schicht ist unter anderem für die Unterteilung der erhaltenen Daten in kleinere Datenpakete zuständig. Auf der Basis dieser Datenpakete kann die Fehlerkorrektur durchgeführt werden.

Die MAC Schicht ist für die Abbildung der logischen Kanäle auf die Transportkanäle zuständig. Dies beinhaltet das Multiplexen der logischen Kanäle, die Verteilung der Daten auf die verschiedenen logischen Kanäle sowie das Wechseln der logischen Kanäle auf die zur Verfügung stehenden Transportkanäle aufgrund der in RRM getroffenen Entscheidung. Hierbei werden verschiedene Arten der logischen Kanäle in Abhängigkeit von dem benutzten Dienst unterschieden. Beispielsweise wird zwischen der zu übertragenden Informationsart, Benutzerdaten oder Kontrolldaten unterschieden. Die Kontrolldaten werden mittels Kontrollkanälen übertragen. Beispielsweise überträgt der Broadcast Control Channel (BCCH) Netzwerkinformationen zu den in einer Zelle vorhandenen und nicht an das Netz angekoppelten, daß heißt über eine Kanalverbindung verfügenden Endgeräten. Auf die verschiedenen Kontrollkanäle der MAC Schicht wird an dieser Stelle nicht näher eingegangen.

Die sogenannten Verkehrskanäle übertragen Benutzerdaten. Hierbei wird zwischen den sogenannten DTCH (Dedicated Traffic Channel) und den sogenannten CTCH (Common Traffic Channel) unterschieden. Ein DTCH ist exklusiv einem Endgerät zugewiesen, so daß mittels des DTCH exklusiv die Benutzerdaten übertragen werden. Im Gegensatz dazu ist der CTCH für die Übertragung der Daten an mehrere Benutzer vorgesehen.

Eine weitere Unterscheidung bei der Aufteilung der Kanäle wird bezüglich der Richtung der Übertragung gemacht. Die Daten werden entweder von dem Netz an den Benutzer übertragen, in diesem Fall ist die Rede von der sogenannten Abwärtsstrecke auch als downlink bezeichnet, oder die Daten werden von dem Benutzer an das Netz gesendet, dann erfolgt die Übertragung auf der sogenannten Aufwärtsstrecke, auch als uplink bezeichnet. In diesem Zusammenhang gibt es Kanäle, die entweder für beide Richtungen oder nur für eine Richtung vorgesehen sind.

Eine ähnliche Unterscheidung der zur Verfügung stehenden Kanäle bezüglich der Richtung der Übertragung und der gemeinsamen oder exklusiven Nutzung der Übertragungsresourcen, wird ebenfalls zwischen den Transportkanälen, die zwischen der MAC Schicht und der physikalischen Schicht definiert sind, vorgenommen. Hierbei wird zwischen den exklusiv zugewiesenen, den sogenannten DCH (Dedicated Channels) und den gemeinsamen Kanälen, den sogenannten CCH (Common Channels) unterschieden. Die DCH Kanäle werden sowohl auf der Aufwärtsstrecke als auch auf der Abwärtsstrecke benutzt. Ein DCH wird einem Benutzer exklusiv für eine Übertragung zugewiesen und die Stabilität dieses Kanals wird während einer Übertragung ständig kontrolliert, um eine möglichst konstante Qualität der Radioübertragung zu gewährleisten. Das bedeutet, es erfolgt eine exklusive Vergabe der Radioresourcen an einen Benutzer während einer Übertragung. Im Gegensatz hierzu werden bei den CCH Kanälen die Radioresourcen zwischen den verschiedenen Benutzern geteilt.

Im folgenden werden im Überblick die verschiedenen gemeinsam genutzten Transportkanäle, die eine Relevanz für die vorliegende Erfindung aufweisen, vorgestellt.

Auf der Aufwärtsstrecke stehen der sogenannte RACH (Random Access Channel) und der sogenannte CPCH (Common Packet Channel) zur Verfügung. Der RACH ist für den initialisierenden Netzzugang mit dem damit verbundenen Verbindungsaufbau auf der Bitübertragungsschicht verantwortlich. Zusätzlich ist er für die Unterstützung der Übertragung der Benutzerdaten vorgesehen. Diese Aufgabe wird ebenfalls von dem CPCH erfüllt.

Auf der Abwärtsstrecke ist der sogenannte FACH (Forward Access Channel) für den Transport sowohl der Kontrolldaten als auch der Benutzerdaten zuständig.

Mittels des sogenannten DSCH (Downlink Shared Channel) können die Nutzdaten zusätzlich zu einem exklusiv reservierten Kanal, DCH übertragen werden. Ein DSCH wird anteilmäßig zwischen den DCHs, für die dieser zugeteilt wurde, genutzt.

Die Aufgabe des RRM, das in einem RNC Knoten plaziert ist, besteht unter anderem in dem Konfigurieren der Radioresourcen in Abhängigkeit von der Charakteristik und Qualität des angeforderten Dienstes. Das bedeutet, daß die Entscheidung über einen Kanalwechsel oder über die Kanalzuteilung bei einem Verbindungsaufbau von dem RRM getroffen wird. Diese Entscheidungen beziehen sich sowohl auf die Übertragung auf der Aufwärtsstrecke als auch auf der Abwärtsstrecke und dienen der Regelung eines effizienten Ausgleiches zwischen der zur Verfügung stehenden Übertragungskapazität auf den Übertragungsstrecken und den Anforderungen, der die Ressourcen der Übertragungsstrecken nutzenden Benutzer.

Mittels unterschiedlicher Algorithmen, auf die an dieser Stelle nicht näher eingegangen wird, bestimmt das RRM wann und in welcher Form der Kanalwechsel zu erfolgen hat. Bei Anwendung dieser Algorithmen werden beispielsweise das Leistungsbudget der mobilen Station und der Zelle berücksichtigt. Unter Verwendung der festgelegten Schwellwerte wird von dem RRM eine Entscheidung über einen Kanalwechsel getroffen. Hierbei verfügen die Algorithmen über eine entsprechende Hysteresis, die zu häufiges Hin- und Herschalten verhindert. Die getroffene Entscheidung spiegelt sich in Form von Parametern wieder, die unter anderem der RLC Schicht übergeben werden. Bei den Parametern handelt es sich um die Transportformate, wie beispielsweise die Datenrate und um die verwendeten Algorithmen, wie zum Beispiel das Verfahren bei einer erneuten Übertragung von Datenpakete.

Im weiteren wird näher auf die Funktionsweise einer MAC Schicht eingegangen.

Die MAC Schicht ist für die Verteilung der von der RLC Schicht empfangenen Datenpakete auf die physikalische Verbindung unter der Berücksichtigung der erlaubten Übertragungsrate zuständig. Diese Verteilung wird im weiteren als das sogenannte Scheduling und die Funktion, die dies auf der MAC Schicht durchführt, als MAC Scheduler bezeichnet. Die MAC Schicht erhält außerdem die Übertragungsparameter von dem RRM. Bei den Übertragungsparameter handelt es sich unter anderem um das sogenannte TFS (Transport Format Set), das sogenannte TFCS (Transport Format Combination Set), die Prioritäten der logischen Übertragungskanäle und die Abbildung der logischen Übertragungskanäle auf die Transportkanäle. Anhand dieser Informationen wird die Verteilung der Datenpakete auf die physikalische Verbindung durchgeführt.

Im folgenden wird kurz auf den Begriff des TFS näher eingegangen. Auf der MAC Schicht sind jedem Transportkanal ein oder mehrere Transportformate in Form eines Satzes der Transportformate, das sogenannte TFS zugeordnet. Ein Transportformat enthält zum Beispiel Informationen über den Kanalkodierungstyp, die Tiefe des Interleaving oder die Übertragungsrate für die Daten, genauer gesagt die Anzahl der Daten, die in einem Rahmen auf der Radioschicht übertragen werden können. Beispielsweise sagt ein TF-Satz der Form (12, 8, 4, 2, 1) aus, daß der Transportkanal, dem dieser Satz zugeordnet ist, entweder 12, oder 8 oder 4 oder 2 oder 1 Datenpaket der RLC Schicht in einem Rahmen auf der Radioschicht übertragen kann. Das heißt einerseits hat die MAC Schicht die Information über die Anzahl der Datenpakete, die in einem TTI versendet werden können, hierbei bezeichnet das TTI (Transmission Time Intervall) die Zeit, die für die Übertragung eines Rahmens festgelegt wurde. Anderseits bekommt die MAC Schicht von der RLC Schicht die Information über die Datenpakete, die zur Übertragung bereitstehen. Diese sind in einem RLC Puffer abgespeichert. Die Verfügbarkeit der beiden Informationen veranlasst die MAC Schicht zur Durchführung des Scheduling Algorithmus.

In UMTS ist es möglich, den Kanalwechsel auf mehrere Arten durchzuführen. Es ist vorgesehen, die Übertragung der Benutzerdaten von einem DCH auf einen anderen DCH zu wechseln. Hierbei kann es vorkommen, daß die Übertragungsrate und/oder das TTI des neu zugewiesenen DCH sich von dem zuletzt genutzten DCH unterscheidet. Eine weitere Möglichkeit ist es, die Übertragung der Benutzerdaten von einem DCH auf einen CCH Kanal zu schalten. Hierbei ist zu beachten, daß die gesamte Übertragungsrate eines CCH höher sein kann als eines DCH, der Benutzer hat jedoch nicht eine exklusive Nutzungsmöglichkeit des Kanals, denn dieser wird mit anderen Benutzern geteilt, so daß die effektiv genutzte Übertragungskapazität kleiner ausfallen kann, als die Übertragungskapazität des zuletzt genutzten DCH gewährleistet hat. Eine Aufteilung des CCH zwischen mehreren Nutzern wird von dem angewendeten Scheduling Algorithmus bestimmt.

Der Kanalwechsel, wie bereits beschrieben, kann sich in Leistungseinbußen der höheren Schichten äußern, beispielsweise der TCP Schicht, insbesondere wenn der Wechsel von einem Kanal mit einer höheren Übertragungsrate abrupt auf einen Kanal mit einer niedrigeren Übertragungsrate durchgeführt wird. Bei einer kleinen Übertragungsrate werden weniger Pakete übertragen und dies führt zu einer langen Zeitspanne zwischen dem Versenden eines Paketes und dem Empfang einer Bestätigungsnachricht. Das führt wiederum dazu, daß die Zeit für die Freigabe eines Paketes von einer höheren Protokollschicht, beispielsweise TCP für eine Übertragung lang wird.
Die erfindungsgemäße Lösung schlägt vor, die Information über den Kanalwechsel, beispielsweise den Zeitpunkt des Kanalwechsels und die Übertragungsparameter effizienter auszunutzen. Hierbei können die Übertragungsparameter eines neuen Kanals einen relativen oder einen absoluten Wert gegenüber einem neuen Kanal aufweisen. Anhand dieser Information kann der Datenfluß an die Eigenschaften des neuen Kanals angepasst werden. Übertragen auf das vorgestellte Ausführungsbeispiel wird der MAC Schicht von dem RRM die Information über den Kanalwechsel mitgeteilt. Anhand der Übertragungsparameter, beispielsweise anhand der Übertragungsrate des alten, das heißt des bis jetzt genutzten Kanals und des neu zugewiesenen Kanals wird die Anzahl der Datenpakete bestimmt, die über die physikalische Verbindung übertragen werden sollen. Die Daten werden in den TTI übertragen. Der Zeitpunkt der Durchführung eines Kanalwechsels wird verwendet, um eine entsprechende Methode anzuwenden. Die erfindungsgemässe Lösung unterscheidet nämlich in Abhängigkeit von den Zeitpunkten, zu denen der Informationsfluß stattfindet zwischen zwei Ausführungsbeispielen. Verfügt die MAC Schicht über die Information über einen in Kürze anstehenden Kanalwechsel, erfolgt eine Anpassung der Übertragungsparameter des alten Kanals auf die erwartende Paketverzögerungszeit des neuen Kanals. Im weiteren wird für diesen Sachverhalt der Begriff Pre-Scheduling verwendet. Ein weiteres Ausführungsbeispiel behandelt den Sachverhalt, wenn die Information über den Kanalwechsel erst nach dessen Durchführung durch die MAC Schicht ausgenutzt wird. In diesem Zusammenhang wird der Begriff Post-Scheduling benutzt.

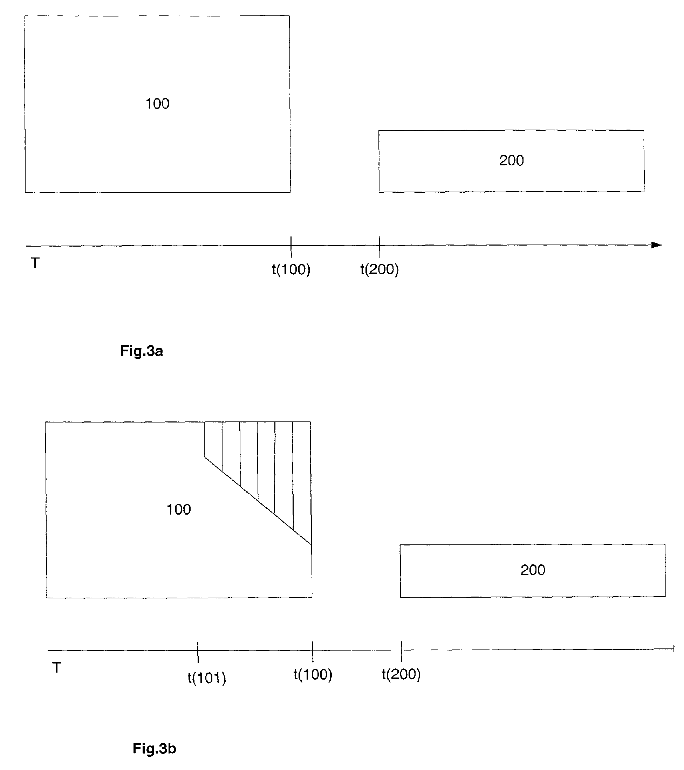

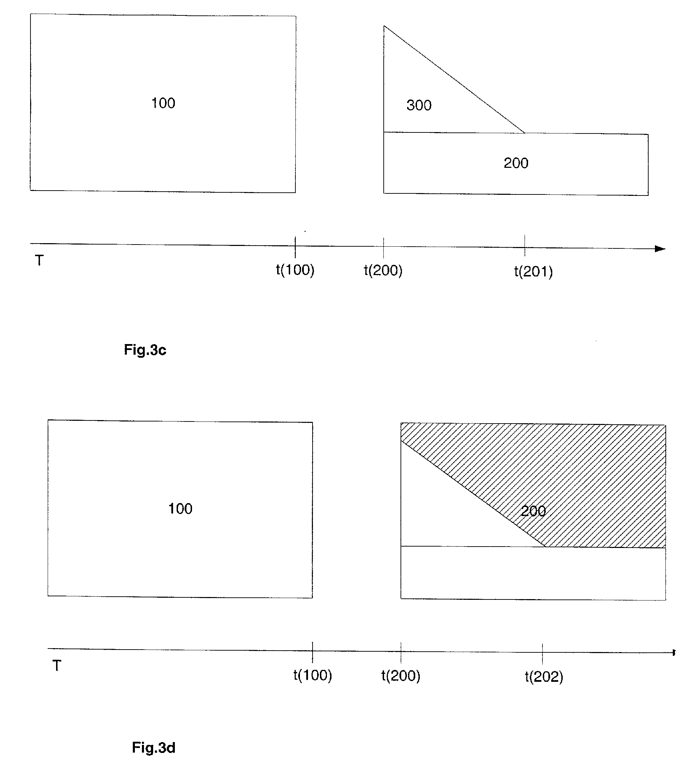

Im weiteren wird die Erfindung anhand der Figuren 3a und 3b näher erläutert.

In Figur 3a ist schematisch die Übertragungsrate von zwei Kanälen dargestellt. Das linke Quadrat stellt die hohe Übertragungsrate des alten Kanals und das linke Quadrat einen neuen Kanal mit einer geringen Übertragungsrate dar. Der freie Bereich zwischen den Quadraten deutet einen Kanalwechsel an, während dessen keine Daten übertragen werden können, sondern es findet ein Austausch der Signalisierungsmeldungen statt. Der zeitliche Ablauf ist mittels einer Zeitachse T, die unter der Figur angeordnet ist, dargestellt. Der Kanalwechsel findet zwischen dem Zeitpunkt t(100) und t(200) statt.

Figur 3b stellt einen Pre-Scheduling dar. Der gestreifte Teil des linken Quadrats deutet auf die nicht genutzte Übertragungsrate des alten Kanals, um auf diese Weise die Übertragungsrate des alten an die Übertragungsrate des neuen Kanals anzupassen. Das heißt ab dem Zeitpunkt t(101) werden weniger Datenpakete übertragen. Die Datenrate wird bis zum Zeitpunkt t(100) verringert bis diese an die Übertragungsrate des neuen Kanals angeglichen ist. Mittels des Pre-Scheduling wird die Anzahl der Datenpakete, die dem Transportkanal übergeben werden, gesteuert. Im Falle, daß die Übertragungsrate des neu zugewiesenen Kanals geringer ist als die Datenrate des aktuell genutzten Kanals, wird die Anzahl der Datenpakete, die pro Zeiteinheit, beispielsweise TTI, gesendet werden, verringert. Ist beispielsweise ein Kanalwechsel von einem Kanal, der die Übertragungsrate von 384kbit/sec aufweist auf einen, der lediglich 64kbit/sec für die Übertragung zur Verfügung stellt, durchzuführen, wird erfindungsgemäß eine langsame Adaption der höheren Übertragungsrate an die niedrigere eingeleitet. Das heißt die Daten werden beispielhaft zuerst mit 256kbit/sec, dann mit 128kbit/sec und schließlich mit 64kbit/sec übertragen. Das heißt, obwohl der MAC Scheduler mehr Datenpakete verschicken könnte, stellt dieser weniger Datenpakete zum Verschicken bereit. In diesem Zusammenhang bedeutet die Bereitstellung der Datenpakete eine Entnahme der Datenpakete aus einem RLC Puffer. Eine langsamere Entnahme der Datenpakete aus dem RLC Puffer hat Einfluss auf das TCP. Denn die Tatsache, daß weniger RLC Datenpakete übertragen werden, hat zur Konsequenz, daß die Bestätigungsnachricht für ein TCP Paket beim Empfänger später erzeugt wird und somit später beim Sender eintritt. Dies führt dazu, daß die RTT Messungen, das heißt die Zeit zwischen der Übergabe eines TCP Datenpakete und dem Erhalt einer Empfangsbestätigung für diesen Datenpaket einen größeren Wert aufweist. Auf diese Weise erfährt das TCP über die Verringerung der Übertragungsrate. Insbesondere bewirkt der erhöhte RTT eine Vergrösserung des RTO. In dieser Ausführungsform entspricht die Bezeichnung aktuell genutzter Kanal der oben gewählten Bezeichnung alter Kanal. Diese Wortwahl entspricht besser dem Sachverhalt beim Pre-Scheduling.

Bei der Adaption der Übertragungen können unterschiedliche Verfahren angewendet werden, die beispielsweise unterschiedlich schnell die Übertragungskapazität verringern. Bei den Verfahren ist jedoch darauf zu achten, daß einerseits nicht zuviel Übertragungskapazität ungenutzt gelassen wird und anderseits aber eine abrupte Änderung in den Übertragungsparametern vermieden werden soll, um auf diese Weise den Zeitlimitablauf zu verhindern.

Im Falle, daß die MAC Schicht Information über den bevorstehenden Kanalwechsel erhält, kann sie erfindungsgemäß die Übertragung steuern und die Anpassung langsam einleiten, in dem der MAC Scheduler die Übertragungsrate des genutzten Kanals nicht in voller Weise ausnutzt, wie dies möglich wäre, sondern die aktuellen Übertragungsparameter langsam an die Übertragungsparameter des neu zugewiesenen Kanals adaptiert, bevor der Kanalwechsel stattfindet. Dies wird dadurch erreicht, daß weniger Datenpakete für die Übertragung bereitgestellt werden als prinzipiell möglich wäre. Die Information über die Anzahl der Datenpakete, die prinzipiell verschickt werden könnten, ist, wie bereits beschrieben, in dem TFS enthalten. Mit diesen Schritten wird gleichzeitig die gesamte Übertragung des TCP langsam adaptiert. Diese Methode erfordert, daß die Übertragungsparameter des neuen Kanals im voraus bekannt sind. Über diese Information verfügt jedoch das RRM und die Aufgabe von RRM besteht in der Mitteilung dieser Informationen der MAC Schicht, so daß die erforderlichen Schritte durchgeführt werden. Die Aufgabe der MAC Schicht besteht in der Sicherung der entsprechenden Übertragungsparametern. Aufgrund der Tatsache, daß die MAC Schicht diese Information vor dem Stattfinden des Kanalwechsels bekommt, verfügt diese sowohl über die Übertragungsparametern des aktuell genutzten als auch des neu zugewiesenen Kanals. Anhand dieser Informationen wird die langsame Adaption der Übertragungen vor der Durchführung des Kanalwechsels erzielt.

Aufgrund dessen, daß die Paketverzögerungszeit des gerade genutzten Kanals künstlich manipuliert wird, insbesondere vergrößert wird, führt dies auf der TCP Schicht zur künstlichen Erzeugung einer höheren Paketverzögerung, in dem schrittweise längere RTT gemessen werden. Diese werden ebenfalls schrittweise bei der Berechnung des RTO berücksichtigt und das resultiert in der Vermeidung von den spurious timeouts. Dies führt folglich zur Vermeidung der überflüssigen Übertragung von Paketen, bei denen fehlerhaft ein Paketverlust erkannt wird und zur Vermeidung der Durchführung von Mechanismen, die nach Erkennung eines Datenpaketverlustes gestartet werden. Auf diese Weise werden Übertragungsressourcen und Zeit gespart.

In einigen Situationen ist der Kanalwechsel sofort durchzuführen, so daß die Zeit nicht ausreicht ein Pre-Scheduling durchzuführen. In diesem Fall schlägt die Erfindung vor, das Scheduling der Datenpakete auf der MAC Schicht nach der Durchführung des Kanalwechsels zu beeinflussen. Ist die Kanalrate des neuen Kanals kleiner, dann ist die abrupte Senkung der Übertragungsrate dadurch auszugleichen, daß zusätzlich zu der anteilig zustehenden Übertragungsrate des neuen Kanals mehr Daten übertragen werden. Dieser Sachverhalt ist aus Figur 3c und 3d zu entnehmen.

Figur 3c stellt einen Sachverhalt dar, bei dem mehr Daten mittels eines zusätzlichen Kanals übertragen werden. Der zusätzliche Kanal, beziehungsweise die genutzte Kapazität des zusätzlichen Kanals ist mittels des Dreiecks 300 dargestellt. Dieser Kanal wird solange genutzt, bis die Übertragungsrate des alten an die Übertragungsrate des neuen Kanals angepasst ist. Das passiert zum Zeitpunkt t(201). Das heißt zwischen den Zeitpunkten t(200) und t(201) erfolgt auch eine Adaption des TCP. Dies kann sich beispielsweise auf einige TCP Datenpakete erstrecken. Bei dieser Methode ist es erforderlich, die Übertragungsparameter des alten Kanals zu sichern. Die MAC Schicht führt beim Post-Scheduling den Kanalwechsel durch, und erst danach wird die Adaption eingeleitet. Das heißt der neu zugewiesene Kanal wird bereits genutzt und deswegen verfügt die MAC Schicht über die Übertragungsparameter dieses Kanals. Die Übertragungsparameter des alten, daß heißt des vor dem Stattfinden des Kanalwechsel genutzten Kanals wurden jedoch gesichert. Aus diesem Grund verfügt die MAC Schicht sowohl über die Parameter des alten als auch des neuen Kanals und anhand dieser Informationen wird eine Anpassung der Übertragungen durchgeführt.

Die Realisierungsformen des Post-Scheduling variieren sowohl zwischen der Aufwärtsstrecke und der Abwärtsstrecke als auch zwischen dem Schalten zu einem DCH oder zu einem CCH. UMTS stellt die sogenannten DSCH Kanäle bereit. Wie bereits beschrieben, sind dies Kanäle, die zusätzlich anteilmäßig zu einem DCH benutzt werden können, um Daten auf der Abwärtsstrecke zu übertragen.

Die erfindungsgemäße Lösung sieht vor, diese Kanäle bei einer Übertragung auf der Abwärtsstrecke im Falle eines Kanalwechsels zeitweilig zu nutzen, um eine bessere Adaption der Übertragungsraten zu erreichen. In diesem Fall ist die Teilung des DSCH zwischen den Benutzern, die zum gegebenen Zeitpunkt den Kanal nutzten zu regeln. Beispielhaft kann an dieser Stelle das Prioritätsprinzip mit der Bevorzugung der Benutzer, bei denen ein Kanalwechsel stattgefunden hat, angewendet werden.

Ein ähnliches Prinzip kann ebenfalls im Falle eines Kanalwechsels von einem DCH auf einen CCH angewendet werden.

In diesem Fall kann zwar die gesamte Rate des CCH Kanals größer als die Übertragungsrate eines DCH sein, jedoch aufgrund der Tatsache, daß der CCH zwischen mehreren Benutzer geteilt wird, kann die Übertragungsrate, die einem Benutzer nach einem Kanalwechsel zugewiesen wurde, wesentlich kleiner ausfallen, als die Rate, die dem Benutzer vor dem Kanalwechsel auf dem zuletzt genutzten DCH zur Verfügung stand. Die erfindungsgemässe Lösung schlägt vor, dem Benutzer zeitweilig, das heißt bis sich die Übertragung an die Übertragungsrate des neu zugewiesenen Kanals angepasst hat, einen höheren Anteil an der Breitbande in dem CCH als es eigentlich für den Benutzer vorgesehen war zuzuteilen. Dieser Schritt verlangt die Anwendung eines Prioritätsprinzips, das die Benutzer bevorzugt, bei denen ein Kanalwechsel stattgefunden hat, somit wird die Regel eines fairen Behandlung aller Benutzer eines CCH, zum Vorteil eines Benutzers gebrochen. Aufgrund der Tatsache, daß nach einem Kanalwechsel die erfindungsgemässe Lösung die Vermeidung der unnötigen Durchführung von TCP Mechanismen, die nach Erkennung eines Paketverlustes gestartet werden, gewährleistet, wird die Anzahl der wiederholten Übertragungen, die im Falle der abrupten Unterbrechungen auftreten, reduziert. Dies führt dazu, daß die Übertragungskapazität des CCH Kanals, die einem Benutzer zugewiesen wird optimaler genutzt, und aus diesem Grund wird die gesamte Übertragungskapazität des CCH effektiver genutzt und dies wirkt sich im Endeffekt bei allen Nutzern des CCH in höheren zur Verfügung stehenden Übertragungskapazitäten aus. Dieser Sachverhalt ist in Figur 3d dargestellt. Zwischen den Zeitpunkten t(200) und t(202) erfolgt eine Anpassung an die einem Benutzer zugewiesene Kapazität, die ab dem Zeitpunkt t(202) anfängt. Das heißt bis zum Zeitpunkt t(202) wird mehr Kapazität einem Benutzer zur Verfügung gestellt, als diesem eigentlich zusteht.

Eine dritte Ausführungsform des erfindungsmässigen Lösung sieht eine Kombination des Pre- und Post-Schedulings vor. Das heißt bei einer rechtzeitigen Meldung über einen anstehenden Kanalwechsel wird zuerst das Pre-Scheduling gemacht und nach der Durchführung des Kanalwechsel das Post-Scheduling angewendet.

Das Pre-Scheduling erweist sich als vorteilhaft bei der Berücksichtigung der zeitlichen Verzögerungen, die mit dem Kanalwechsel zusammenhängen, für die Ermittlung der zu verschickenden Datenmenge. Während eines Kanalwechsels, zwischen t(100) und t(200) werden Signalisierungsmeldungen ausgetauscht, diese benötigen Zeit und deswegen führen sie zur zeitlichen Verzögerungen, die beim Pre-Scheduling berücksichtigt werden können.

Bei der Realisierung der Erfindung ist es erforderlich, daß die RRM Einheit den Kanalwechsel der MAC Einheit signalisiert. In UMTS ist es jedoch möglich, daß die MAC Einheit in unterschiedlichen Netzknoten vorzugsweise in RNC oder in einer mobilen Station, plaziert wird. Im folgenden werden beispielhaft verschiedene Fälle in Abhängigkeit der Plazierung der MAC Schicht dargestellt.

Im Falle, daß die MAC Einheit und die RRM Einheit sich in dem gleichen Netzknoten befinden, ist die Funktionsweise der Erfindung gewährleistet. Im Falle, daß die MAC Einheit beispielsweise in dem Endgerät des Benutzers plaziert ist, ist eine Signalisierung an die MAC Schicht notwendig. Ebenfalls ist es erforderlich, die MAC Schicht zu informieren, wenn diese sich in einem anderen RNC, als das in dem das RMM plaziert wurde, befindet. In diesem Fall ist ein Signal über die Schnittstelle zwischen den RNCs zu versenden. Weiterhin betrifft die Erfindung ein Computerprogramm gespeichert auf einem computerlesbaren Medium oder in einer Form, die in einen Arbeitsspeicher eines Computers geladen werden kann, das eine Vorrichtung gemäß eines der Ansprüche 1 bis 10 steuert.

## Patentansprüche

1. Verfahren zur Verbesserung eines Datendurchsatzes einer Übertragung über ein Kommunikationsnetz mit einer Verwaltungseinheit zur Verwaltung von Kanälen, die Übertragungsparameter aufweisen und mit einer Bereitstellungseinheit zur Bereitstellung, zur Verteilung und zum Verschicken von Daten über die Kanäle,
- bei dem die Verwaltungseinheit die Bereitstellungseinheit über einen Kanalwechsel von einem alten auf einen neuen Kanal informiert und,
- bei dem die Information über die Übertragungsparameter des neuen und des alten Kanals als auch über einen Zeitpunkt der Durchführung des Kanalwechsels der Bereitstellungseinheit bereitgestellt wird und,
- bei dem anhand dieser Informationen eine Anpassung der Übertragungsparameter des alten Kanals an die Übertragungsparameter des neuen Kanals durchgeführt wird.

2. Verfahren nach Anspruch 1 bei dem die Anpassung mittels einer Steuerung der Anzahl der Datenpakete, die in einer Zeiteinheit versendet werden, realisiert wird.

3. Verfahren nach Anspruch 1 oder 2 bei dem die Anpassung der Daten vor und /oder nach der Durchführung eines Kanalwechsels durchgeführt wird.

4. Verfahren nach einem der vorherigen Ansprüche bei dem bei der Anpassung auf einen Kanal, dessen Übertragungsparameter eine hohe Paketverzögerungszeit hervorrufen, die Anzahl der zur Übertragung bereitgestellten Datenpakete vor der Durchführung des Kanalwechsels verringert wird.

5. Verfahren nach einem der vorherigen Ansprüche bei dem bei der Anpassung auf einen Kanal, dessen Übertragungsparameter eine hohe Paketverzögerungszeit hervorrufen, nach der Durchführung des Kanalwechsels zusätzlich zu einer anteilig zustehenden Übertragungskapazität zeitweilig mehr Daten übertragen werden.

6. Verfahren nach Anspruch 5 bei dem zusätzliche Daten über einen oder mehrere zusätzliche Kanäle übertragen werden.

7. Verfahren nach Anspruch 5 bei dem zeitweilig eine höhere Übertragungskapazität in einem Kanal für die Übertragung von mehr Daten zur Verfügung gestellt wird.

8. Verfahren nach einem der vorherigen Ansprüche bei dem eine Sicherung der Übertragungsparametern zwecks der Durchführung einer Anpassung vorgenommen wird.

9. Verfahren nach einem der vorherigen Ansprüche bei dem der Kanalwechsel auf einen exklusiv genutzten Kanal durchgeführt wird.

10. Verfahren nach einem der vorherigen Ansprüche bei dem der Kanalwechsel auf einen zwischen mehreren Benutzern gemeinsam genutzten Kanal durchgeführt wird.

11. Vorrichtung zur Verbesserung eines Datendurchsatzes einer Übertragung über ein Kommunikationsnetz mit einer Verwaltungseinheit zur Verwaltung von Kanälen, die Übertragungsparameter aufweisen und mit einer Bereitstellungseinheit zur Bereitstellung von Daten für die Übertragung über die Kanäle mit,
- Entscheidungsmitteln in der Verwaltungseinheit zu einem Entscheiden über einen Kanalwechsel und mit,
- Mitteilungsmitteln zu einer Mitteilung der Entscheidung an die Bereitstellungseinheit und mit,
- Speicher zu einer Sicherung der Übertragungsparameter eines alten Kanals und/oder eines neuen Kanals und mit,
- Anpassungsmitteln zu einer Anpassung der Übertragung an die Übertragungsparameter des neuen Kanals.

12. Vorrichtung nach Anspruch 11 bei dem die Verwaltungseinheit und die Bereitstellungseinheit in einem Netzknoten sind.

13. Vorrichtung nach Anspruch 11 bei dem die Bereitstellungseinheit und die Verwaltungseinheit in unterschiedlichen Netzknoten plaziert sind.

14. Vorrichtung nach Anspruch 13 bei dem eine Signalisierung zwischen der Bereitstellungseinheit und der Verwaltungseinheit zwecks der Übermittlung der Mitteilung vorgesehen ist.

15. Computerprogramm gespeichert auf einem computerlesbaren Medium oder in einer Form, die in einen Arbeitsspeicher eines Computers geladen werden kann, das eine Vorrichtung gemäß eines der Ansprüche 1 bis 10 steuert.
